Europäisches Patentamt

(19) European Patent Office

Office européen des brevets

(11) Numéro de publication: **0 025 386**
**B1**

(12) **FASCICULE DE BREVET EUROPEEN**

(45) Date de publication du fascicule du brevet:
09.02.83

(51) Int. Cl.³: **G 02 F 1/29**, G 02 F 1/05

(21) Numéro de dépôt: 80401240.9

(22) Date de dépôt: 29.08.80

(54) Commutateur électro-optique à commande électrique, et circuit optique intégré comprenant un tel commutateur.

(30) Priorité: 06.09.79 FR 7922297

(43) Date de publication de la demande:
18.03.81 Bulletin 81/11

(45) Mention de la délivrance du brevet:
09.02.83 Bulletin 83/6

(84) Etats contractants désignés:
DE GB NL SE

(56) Documents cités:
FR-A-2 335 864
GB-A-1 455 286
OPTICS COMMUNICATIONS, vol. 24, no. 1, janvier 1978 Amsterdam NL F. FAVRE et al.: »Modulateur et commutateur électrooptiques«, pages 139—142
FREQUENZ, vol. 32, no. 3, mars 1978 M. PAPUCHON: »Recent progresses in electrooptic modulation and switching using LiNb03 waveguides« pages 75—78
APPLIED OPTICS, vol. 17, no. 1, janvier 1978 New York US H. NAITOH et al.: »Mirror-type optical branch and switch«, pages 101—104

(73) Titulaire: THOMSON-CSF, 173, Boulevard Haussmann, F-75379 Paris Cedex 08 (FR)

(72) Inventeur: Papuchon, Michel, THOMSON-CSF SCPI 173, bld Haussmann, F-75360 Paris Cedex 08 (FR)
Inventeur: Puech, Claude, THOMSON-CSF SCPI 173, bld Haussmann, F-75360 Paris Cedex 08 (FR)

(74) Mandataire: Lepercque, Jean et al, THOMSON-CSF SCPI 173, Bld Haussmann, F-75379 Paris Cedex 08 (FR)

Commutateur électro-optique à commande électrique, et circuit optique intégré
comprenant un tel commutateur

La présente invention concerne un commutateur électro-optique à commande électrique utilisant le couplage du rayonnement entre deux guides optiques.

Il est connu de réaliser un commutateur électro-optique intégré dans un substrat à la surface duquel sont formées deux zones de propagation guidée alignées parallèlement l'une à l'autre, associées à des électrodes permettant de créer dans les guides des champs électriques modifiant les vitesses de propagation. Un rayonnement incident dans l'un des guides peut être transféré dans l'autre de 0 à 100%, selon les sens et amplitudes des champs électriques créés. Un tel commutateur recquiert une grande précision sur les tensions à appliquer aux électrodes, ainsi que sur la longueur des deux zones guidées parallèles. Corrélativement, comme les propriétés optiques du matériau dans lequel sont réalisés les guides dépendent de la longueur d'onde utilisée, les conditions relatives à la longueur de couplage et aux tensions de commande ne peuvent pas être respectées dans une large gamme de longueur d'ondes. Il en est de même quant à la polarisation des rayonnements guidés. L'article de M. PAPUCHON: »Recent progresses in electro-optic modulation and switching using LiNbO₃ waveguides« paru aux pages 75−78 de la revue FREQUENZ, vol. 32, n° 3, mars 1978 décrit ce type de commutateur ainsi qu'une variante de réalisation dans laquelle plusieurs paires d'électrodes sont disposées le long de deux tronçons parallèles de guides optiques. Cette variante permet d'ajuster électriquement les deux états de cummotation sans exiger de la fabrication que la longueur de la section de couplage soit exactement un multiple impair de la longueur de couplage.

L'invention vise à permettre de plus grandes tolérances de fabrication et une moindre précision sur les tensions de commande, ainsi qu'une possibilité de fonctionnement dans une large gamme de longueurs d'ondes, et quelque soit la polarisation du rayonnement.

Pour obtenir des variations des vitesses de propagation dans les deux guides, l'invention préconise des configurations de guides et d'électrodes particulières. Deux modes de réalisation sont particulièrement préconisés. Selon le premier, les guides sont parallèles dans la zone de couplage et associés respectivement à deux électrodes biaisées de façon à recouvrier entièrement les guides aux extrémités de la zone de couplage, ce qui indiut un effet électro-optique maximal si l'orientation du matériau électro-optique est convenablement choisie, et à leur être adjacentes au voisinage du centre, ce qui induit un effet électro-optique quasi nul. Selon le deuxième mode de réalisation, on obtient des effets semblables avec des électrodes parallèles et des guides non parallèles.

L'invention a donc pour objet un commutateur électro-optique destiné à transférer entre deux guides d'ondes présentant une zone commune de couplage une fraction prédéterminée d'un rayonnement optique sous la commande d'une tension électrique, dans lequel la vitesse de propagation du rayonnement dans l'un au mois des deux guides varie selon la longueur de ce duide de façon que les vitesses dans les deux guides soient égales au centre de la zone de couplage, caractérisé en ce que la tension électrique est appliquée à deux paires d'électrodes associées respectivement aux deux guides et disposées dans la zone de couplage de façon que les électrodes de l'une au moins des deux paires recouvrent le guide associé sur une fraction de la largeur du guide variant selon la longueur de ce guide, le mode de branchement électrique des deux paires d'électrodes déterminant la fraction d'énergie transférée.

D'autres caractéristiques et avantages de l'invention apparaîtront mieux à l'aide de la description ci-après et de ; figures annexées parmi lesquelles:

— la figure 1 représente un coupleur directionnel de type cónnu;

— la figure 2 est une vue en coupe du coupleur:

— les figures 3 et 4 sont des diagrammes explicatifs:

— les figures 5 et 7 représentent un commutateur selon l'invention, dans un premier état de fonctionnement;

— les figures 6 et 8 sont des diagrammes explicatifs;

— la figure 9 représente un commutateur selon l'invention, dans un deuxième état de fonctionnement;

— les figures 10 et 11 sont des diagrammes explicatifs;

— la figure 12 représente une variante de réalisation de l'invention.

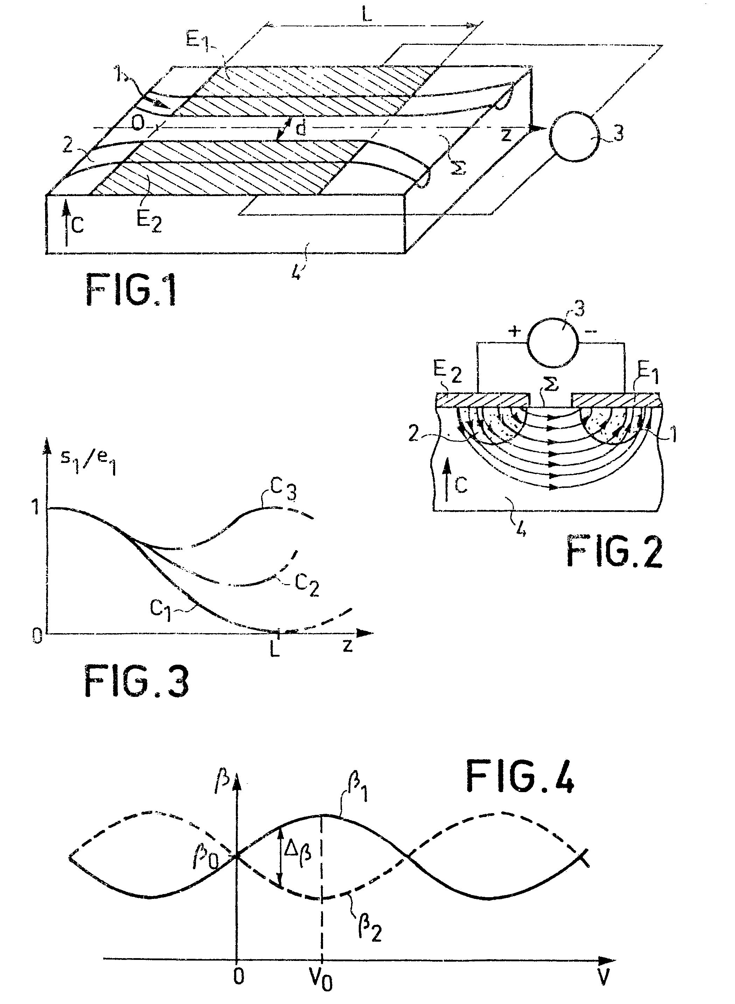

La figure 1 représente un coupleur directionnel en optique intégrée, dont on rappelle le fonctionnement comme commutateur électro-optique. Deux guides d'ondes optiques 1 et 2 sont obtenus dans un substrat 4 par création de zones dans lesquelles l'indice de réfraction est supérieur à celui du substrat. Parmi d'autres, un procédé de réalisation classique est la diffusion de titane à la surface $\Sigma$ d'un substrat en niobate de lithium. Les guides 1 et 2, constitués du même matériau électro-optique, ont même largeur et même épaisseur. Ils sont parallèles, au moins sur une partie rectiligne de longueur L et sont alors distants d'une valeur d dont l'ordre de grandeur est de quelques fois la longueur d'onde des rayonnements optiques destinés à être propagés dans les guides.

Des électrodes métalliques $E_1$ et $E_2$ sont déposées sur la face du substrat portant les guides. Elles recouvrent entièrement respectivement les guides 1 et 2 sur la longueur L. Elles sont reliées à une source de tension 3.

Le coupleur est représenté en coupe sur la figure 2, de façon à montrer l'allure des lignes de champs électriques créés lorsque la source 3 délivre une tension continue V. On sait que ces lignes de champ sont courbes. traversent les guides et le substrat en allant d'une électrode à l'autre, et sont, au niveau de la surface $\Sigma$ où sont disposées les électrodes, perpendiculaires à cette surface. Ainsi, on peut considérer que les champs électriques agissant sur les guides 1 et 2 sont sensiblement perpendiculaire à la surface $\Sigma$, égaux en valeur absolue et de signes contraires. La composante tangentielle est très faible, et de plus, de même sens pour les deux guides.

Dans le cas du niobate de lithium, on sait que les effets électro-optiques sont maximaux lorsque le champ électrique est parallèle à l'axe c du cristal. C'est ainsi que, sur les figures 1 et 2, on a représenté l'axe c normal à la surface $\Sigma$. Par contre, lorsque l'axe c est perpendiculaire aux champs électriques, les effets électro-optiques sont très faibles. Ce serait le cas si l'axe c était parallèle à la surface $\Sigma$. Dans ce cas, on optient par contre les effets maximaux avec une disposition d'électrodes différente de celle représentée sur les figures 1 et 2. En effet, si l'on dispose les électrodes $E_1$ et $E_2$ de part et d'autre des guides 1 et 2, contigües à ceux-ci mais ne les recouvrant pas, il est facile de montrer que les lignes de champ traversent les guides dans une direction sensiblement parallèle à la surface $\Sigma$.

En reprenant les configurations des figures 1 et 2, le fonctionnement du commutateur est illustré par les courbes de la figure 3. Il est supposé que de l'énergie lumineuse est introduite dans le guide I uniquement. Le diagramme de la figure 3 donne les variations du rapport $s_2/e_1$, $e_1$ étant l'énergie couplée dans le guide I, $s_1$ étant l'énergie présente dans ce même guide 1 au fur et à mesure de sa propagation, en fonction de la distance z parcourue par les ondes lumineuses, l'origine étant prise à l'extrémité de la zone de longueur L correspondant à l'entrée de l'énergie.

La courbe $C_1$ est obtenue lorsque la tension V délivrée par la source 3 est nulle. En raison du couplage entre les deux guides, l'énergie passe progressivement du guide 1 vers le guide 2 selon une loi sinusoïdale, sie bien que le rapport $s_1/e_1$ varie selon la même loi. Il passe par 0 au bout d'une longueur $l_0$ appelée longueur de couplage au repos où le transfert d'énergie est total. Le transfert redevient nul au bout de 2 lo, et ainsi de suite.

Lorsque la tension V appliquée aux électrodes n'est pas nulle, elle provoque par effet électro-optique des variations de vitesse de propagation des ondes dans les guides 1 et 2 sensiblement de même valeur absolue et de signes contraires. On obtient ainsi une différence $\Delta\beta$ entre les constantes de phase des deux guides, très inférieure à la valeur $\beta_0$ des vonstantes de phase dans le cas où $V = 0$.

Cette différence $\Delta\beta$ a deux effets: une diminition de la longueur de couplage $l_V < l_0$ et une diminution de ce couplage: le transfert n'est plus total pour

$$z = l_V \text{ . On a } s_1/e_1 = \frac{1}{\frac{\Delta\beta^2}{4C^2}+1} \sin^2 cz \sqrt{\frac{\Delta\beta^2}{4C^2}+1}$$

où C est le coefficient de couplage qui dépend notamment de la distance inter-guides d et des indices de répartition du substrat et des guides: $C = \frac{1}{l_0}$. La courbe $C_2$ est obtenue pour une faible valeur de V. Si l'on fait croître cette valeur, on arrive au cas où la longueur de couplage $l_V$ est égale à $\frac{l_0}{2}$. Dans ce cas, pour $z = l_0$, où le transfert étant total avec $V = 0$, le transfert est nul. En choisissant $L = l_0$ ou un multiple impair de $l_0$, on recueille, lorsque $V = 0$, toute l'énergie dans le guide 2 et il existe une valeur de $\Delta\beta$ pour laquelle au contraire toute l'énergie est recueillie dans le guide I. On a ainsi un commutateur. La valeur adéquate de $\Delta\beta$ dépend étroitement de la longueur L.

La figure 4 illustre les variations des constantes de phase $\beta_1$ et $\beta_2$ dans les guides 1 et 2 en fontion de la valeur de la tension appliquée V. Lorsque $V = 0$, les constantes $\beta_1$ et $\beta_2$ ont une valeur commune $\beta_0$. Lorsque V augmente, $\beta_1$ augmente et $\beta_2$ diminue. Les variations sont sinusoïdales et en sens contraires. A partir d'une certaine valeur de tension Vo, $\beta_1$ est maximal et $\beta_2$ minimal, si bien que la différence $\Delta\beta$ est maximale. Cette différence décroît ensuite jusqu'à $V = 2Vo$ etc... Lorsqu'on inverse la polarité de la tension V, les variations sont semblables mais de sens opposées. On constate donc que, pour obtenir une valeur précise de $\Delta\beta$, celle qui conduit par exemple à l'un des deux états du commutateur, il faut que V appartienne à une gamme de valeurs précises, une légère variation par rapport à l'une de ces valeurs entraîne une variation de $\Delta\beta$ et un mauvais fonctionnement du commutateur.

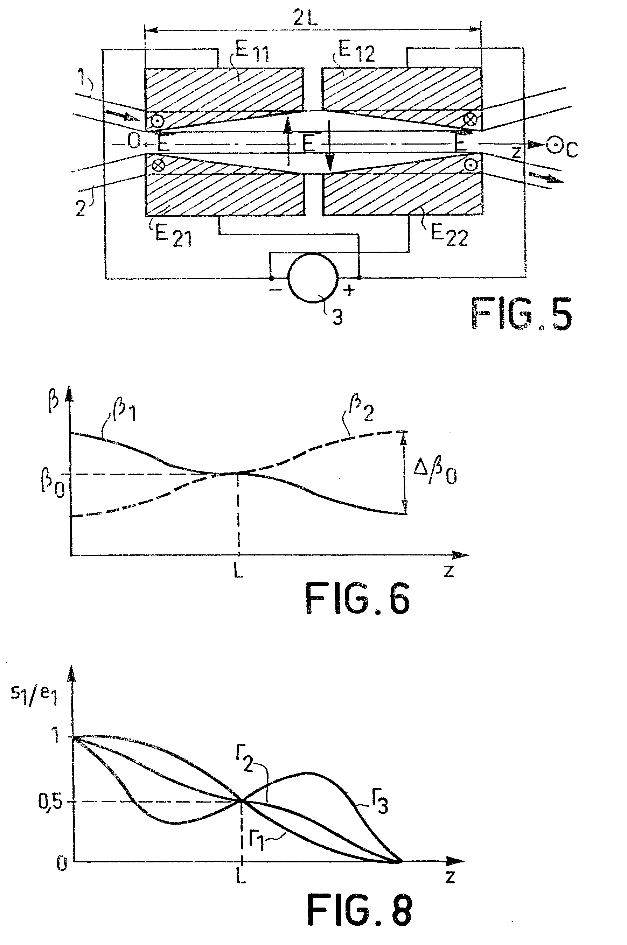

En vue de diminuer les exigences de précision sur la longueur L du coupleur et sur la tension de commutation, l'invention préconise un nouveau schéma de commutateur, représenté sur la figure 5 dans laquelle les éléments communs avec ceux de la figure 1 substrat et guides sont référencés de la même manière. A chacun des deux guides est associée une paire d'électrodes de même longueur (au lieu d'une sur la figure 1): $E_{11}$, $E_{12}$ pour le guide I, $E_{21}$, $E_{22}$ pour le guide 2. La forme des électrodes est différente de celle des électrodes $E_1$ et $E_2$ de la figure 1. Elles présentent un profil biaisé par rapport à la direction des guides, de façon symétrique par rapport à l'axe longitudinal des guides. Elles sont disposées de la façon suivante: En $z = 0$, les électrodes $E_{11}$ et $E_{21}$ recouvrent respectivement les guides 1 et 2. Lorsque z croît, ces électrodes dégagent progressivement les guides et en $z = L$, elles sont adjacentes aux guides. De façon symétrique, en $z = L + \varepsilon$ où $\varepsilon$ a une valeur faible, les électrodes $E_{12}$ et $E_{21}$ sont adjacentes aux guides. Quand $z$ croît, elles recouvrent de plus en plus les guides. Elles les recouvrent complètement en $z = 2L + \varepsilon$. Dans la suite de la description, on négligera la valeur de $\varepsilon$. Toutefois, les électrodes de chaque paire ne sont pas accolées.

Les quatre électrodes étant reliées à une source de tension commune 3, le fonctionnement du commutateur dépend du mode de liaison.

1er état:
  $E_{11}$ et $E_{22}$ sont reliées à la borne + de la source 3
  $E_{12}$ et $E_{21}$ sont reliées à la borne − de la source 3.

— En $z = 0$, comme les électrodes recouvrent entièrement les guides, la configuration des lignes de champ électrique est semblable à celle de la figure 2, c'est à dire que le champ dans les guides est normal à la surface $\Sigma$, donc parallèle à l'axe c du cristal, et que l'effet électro-optique est maximal, induisant des variations maximale pour les constantes $\beta_1$ et $\beta_2$, par rapport à leur valeur commune $\beta_0$ en l'absence de tension, comme on peut voir sur le diagramme de la figure 6. $\Delta\beta$ a une valeur maximale $\Delta\beta_0$.
— Lorsque $z$ croît entre O et L, une partie de plus en plus importante des lignes de champ est parallèle à la surface $\Sigma$ lorsqu'elles traversent les guides. De plus, la distance inter-électrodes augmentant, à tension égale, l'intensité du champ électrique diminue légèrement. En conséquence, les variations de $\beta_1$ et $\beta_2$ diminuent.
— En $z = L$, l'effet électro-optique est quasi nul et $\beta_1 = \beta_2 = \beta_0$.
— A partir de $z = L$, le sens du champ électrique se trouve inverseé.
— Quand $z$ croît de L + 2L, l'effet électro-optique croît mais, le sens du champ étant inverse, les sens de variations de $\beta_1$ et $\beta_2$ sont contraires au cas précédent.
— En $z = 2L$, on aboutit à une différence $\Delta\beta$ sensiblement de même valeur qu'en $z = 0$, mais de signe opposé.

Les variations de $\beta_1$ et $\beta_2$ telles que représentées sur la figure 6 sont continues, à conditions qu'il n'y ait pas de discontinuités dans le champ électrique, c'est à dire que les variations $\Delta\beta$ soient très faibles sur une longueur de l'ordre de la longueur d'onde des rayonnements propagés. Il convient donc de choisir une valeur $\Delta\beta_0$ assez faible. On verra par la suite qu'il existe un seuil minimal.

La figure 8 montre les conséquences du fonctionnement du dispositif dans ce premier état sur le rapport $\dfrac{s1}{e1}$ entre l'énergie présente dans le guide 1 et l'énergie initiale en $z = 0$, en supposant qu'aucune énergie n'est introduite dans le guide 2.

Les courbes $\Gamma_1$, $\Gamma_2$, $\Gamma_3$ correspondent respectivement à trois valeurs croissantes du rapport $\dfrac{L}{l}$ où $l$ est la longueur de couplage au repos définie précédemment. Pour la courbe $\Gamma_1$, $L = 1$; pour $\Gamma_2$, $\dfrac{L}{l} = 2$; pour $\Gamma_3$, $\dfrac{L}{l} > 2$. Dans tous les cas, si $L \geq 1$ et si V est tel que $\Delta\beta_0$ est assez grand pour que le transfert soit quasi nul en $z = 0$, en $z = L$, $\dfrac{s1}{e1}$ vaut approximativement $\dfrac{1}{2}$ et en $z = 2L$, $\dfrac{s1}{e1}$ est nul. On a donc un transfert total de l'énergie du guide 1 vers le guide 2 quelque soit la valeur du rapport $\dfrac{L}{l}$, à condition que ce rapport soit supérieur à l, ce qui implique quelque soient les valeurs de L et de V (V agissant sur $\Delta\beta_0$ et sur l).

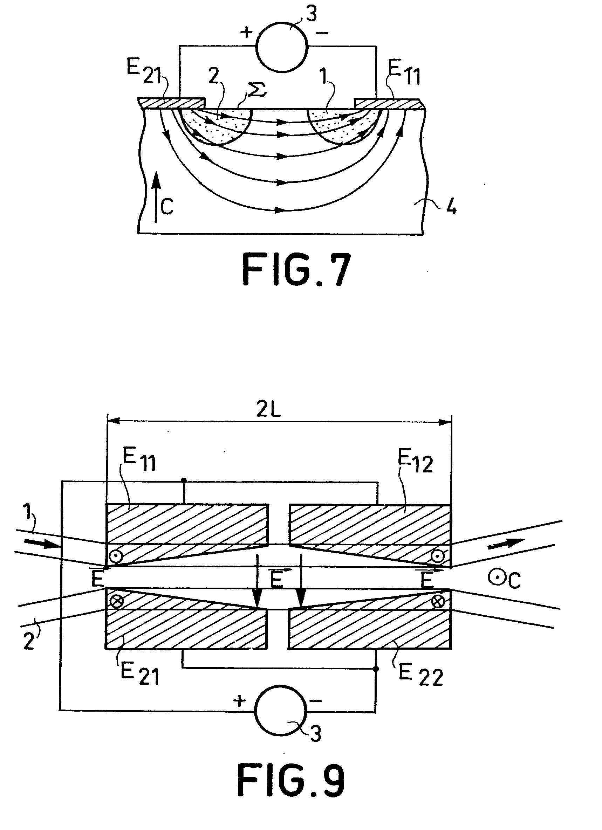

2ème état:
  Le dispositif est représenté dans cet état sur la figure 9.
  $E_{11}$ et $E_{12}$ sont reliées à la borne $\pm$ de la source 3
  $E_{21}$ et $E_{22}$ sont reliées à la borne − de la source 3.

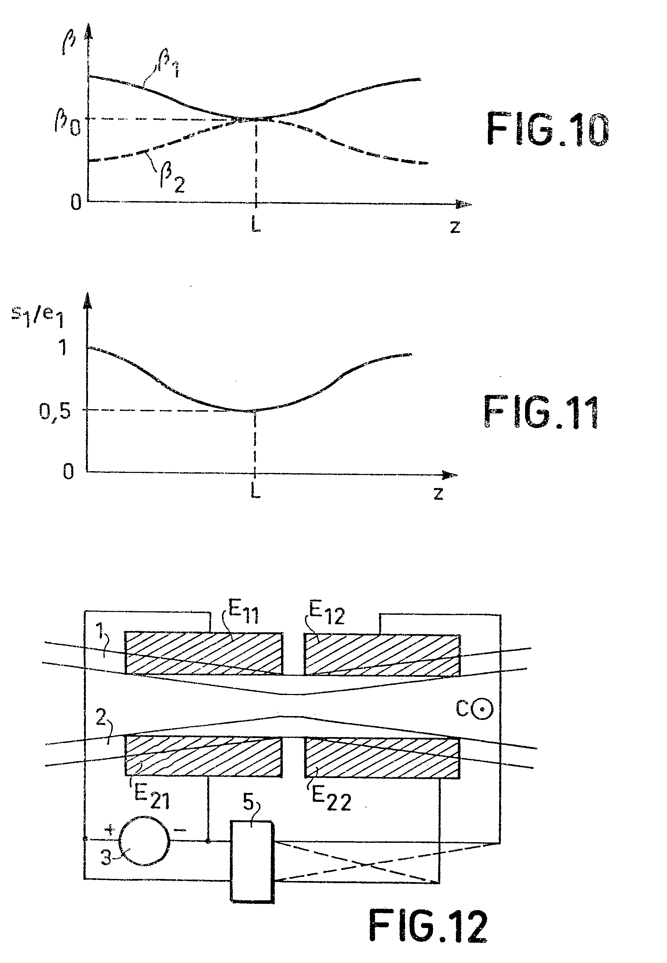

— Entre $z = 0$ et $z = L$, le branchement des électrodes $E_{11}$ et $E_{21}$ étant identique au cas précédent, les orientations des lignes de champ sont inchangées, de même que l'allure des variations de $\beta_1$ et $\beta_2$, représentées sur la figure 10.
— Entre $z = L$ et $z = 2L$, les orientations des lignes de champ sont inversées par rapport au cas précédent. L'effet électro-optique obtenu est du même signe que celui obtenu entre $z = 0$ et $z = L$, si bien que $\beta_1$ et $\beta_2$ variant progressivement de $\beta_0$ à leurs valeurs respectives en $z = 0$.

Les variations du rapport $s_1/e_1$, illustrées sur la figure 11 sont donc identiques à celles représentées sur la figure 8 entre $z = 0$ et $z = L$, c'est à dire de 1 à environ $\dfrac{1}{2}$. Entre $z = L$ et $z = 2L$, $s_1/e_1$ revient à sa valeur initiale 1. On a donc un transfert d'énergie nul entre les guides 1 et 2, quelque soient les valeurs de L et de V satisfaisant aux conditions énoncées précédemment. Ainsi, le commutateur à deux états obtenu fonctionne avec de grandes tolérances sur les dimensions du coupleur et la tension de commande. En raison de cette tolérance, le dispositif est à large bande, c'est à dire qu'il peut fonctionner dans une grande gamme de longueur d'onde. Il peut être également insensible à la polarisation des rayonnements guidés.

A titre d'exemple non limitatif, le commutateur selon l'invention peut être réalisé avec des guides de largeur 2 $\mu$m espacés de d = 3 $\mu$m, obtenus par diffusion de titane dans du niobate de lithium. La longueur de chaque moitié peut être de l'ordre de 1 à 2 cm et la tension de commande V inférieure à 10 V. On obtient ainsi des variations relatives maximales $\frac{\Delta \beta}{\beta_0}$ de l'ordre de $10^{-4}$ à $10^{-3}$, $\beta_0$ valant environ 2,2 pour le niobate de lithium.

Des variations lentes du coefficient de couplage entre les guides, peuvent être obtenue avec des guides parallèles et des électrodes biaisées, comme décrit précédemment. On obtiendrait des résultats semblables avec des guides non parallèles, comme représenté sur la figure 12. Les variations d'orientation des lignes de champ par rapport aux guides sont semblables. La distance entre guides ne doit pas trop varier, pour que les propriétés du coupleur ne soient pas modifiées. La figure 12 représente en outre, à titre d'exemple non limitatif, des moyens de commande de l'état de commutation. Il s'agit d'un commutateur rotatif ayant deux entrées respectivement reliées aux bornes + et − de la source 3, pouvant relier ces bornes aux électrodes $E_{12}$ et $E_{22}$ en vue d'obtenir soit le premier état (liaisons en traits pleins), soit le deuxième état (liaisons en pointillés).

Il est possible de réaliser des configurations intermédiaires entre les deux décrites, dans lesquelles ni les guides, ni les électrodes ne sont parallèles.

**Revendications**

1. Commutateur électro-optique à commande électrique comprenant deux guides d'ondes (1, 2) formés dans un matériaux électro-optique (4) et des électrodes ($E_{11}$, $E_{12}$, $E_{21}$, $E_{22}$) créant un champ électrique destiné à moduler la vitesse des rayonnements optiques propagés par ces guides dans deux tronçons adjacents, afin d'effectuer un transfert d'énergie en fonction d'une tension de commande, caractérisé en ce que l'intensité du champ électrique modulateur (E) créé par les électrodes augmente le long de ces tronçons adjacents lorsqu'on s'éloigne de leurs milieux; les orientations du champ électrique de part et d'autre de ces milieux étant semblables dans un état de commutation et inversées dans un autre état.

2. Commutateur selon la revendication 1, caractérisé en ce qu'il comprend deux paires d'électrodes ($E_{11}$, $E_{12}$, $E_{21}$, $E_{22}$), chaque paire créant des champs électriques dans les deux tronçons respectivement de part et d'autre de leurs milieux, la fraction de largeur des guides (1, 2) recouvertes par les électrodes étant croissante lorsque l'on s'éloigne des milieux des tronçons de même guide d'ondes; le commutateur comprenant en outre des moyens générateurs de tension (3) fournissant entre les deux électrodes des deux paires des tensions de même signe dans le premier état et de signes contraires dans le deuxième état.

3. Commutateur selon la revendication 2, caractérisé en ce que, les deux tronçons étant parallèles, les électrodes ($E_{11}$, $E_{12}$, $E_{21}$, $E_{22}$) sont biaisées de façon à recouvrir complètement les extrémités des deux tronçons et à être adjacentes aux deux tronçons au voisinage de leurs milieux.

4. Commutateur selon la revendication 2, caractérisé en ce que les électrodes ($E_{11}$, $E_{12}$, $E_{21}$, $E_{22}$) des deux paires ayant entre elles une distance constante, les deux tronçons sont non parallèles de façon à être recouverts complètement par les électrodes à leurs extrémités et à être adjacents aux électrodes au voisinage de leurs milieux.

5. Commutateur selon l'une quelconque des revendications 2 à 4, caractérisé en ce que les moyens générateurs comprennent une source de tension (3) munie de moyens de commande (5) permettant de la brancher en parallèle sur les deux électrodes des deux paires, dans le même sens pour le premier état, et en opposition pour le deuxième état.

6. Commutateur selon l'une quelconque des revendications 1 à 5, caractérisé en ce que les guides (1, 2) sont formés à la surface d'un substrat ferro-électrique (4).

7. Commutateur selon la revendication 6, caractérisé en ce que le matériau (4) est du niobate de lithium orienté de façon que son axe c soit normal à la surface où sont formés les guides (1, 2), ceux-ci étant obtenus par diffusion de titane dans le substrat (4).

8. Circuit optique intégré, caractérisé en ce qu'il comprend au moins un commutateur selon l'une quelconque des revendications précédentes.

**Patentansprüche**

1. Elektro-optischer, elektrisch gesteuerter Schalter mit zwei Wellenleitern (1, 2), die in einem elektro-optischen Material (4) gebildet sind, und Elektroden ($E_{11}$, $E_{12}$, $E_{21}$, $E_{22}$), die ein elektrisches Feld erzeugen, das dazu bestimmt ist, die Geschwindigkeit der optischen Strahlung zu modulieren, die sich über diese Leiter in zwei aneinander angrenzenden Abschnitten ausbreitet, um eine Energieüberführung in Abhängigkeit von einer Steuerspannung durchzuführen, dadurch gekennzeichnet, daß die Intensität des modulierten elektrischen Feldes (E), das durch die Elektroden erzeugt wird, entlang diesen aneinander angrenzenden Abschnitten mit zunehmender Entfernung von ihren Mitten zunimmt, wobei die Orientierungen des elektrischen Feldes auf beiden Seiten dieser Mitten in dem einen Schalterzustand gleich und in dem anderen Zustand entgegengesetzt sind.

2. Schalter nach Anspruch 1, dadurch gekennzeichnet, daß er zwei Elektrodenpaare ($E_{11}$, $E_{12}$, $E_{21}$, $E_{22}$) umfaßt, wobei jedes Paar elektrische Felder in den zwei Abschnitten auf beiden Seiten ihrer Mitten erzeugt, wobei der Längenbruchteil der Leiter (1, 2), die von den Elektroden bedeckt sind, mit zunehmender Entfernung von den Mitten der Abschnitte derselben Wellenleiter zunimmt, wobei der Schalter ferner Spannungsgeneratormittel (3) umfaßt, die zwischen den beiden Elektroden zwei Paare von Spannungen gleichen Vorzeichens in dem ersten Zustand und entgegengesetzten Vorzeichens in dem zweiten Zustand liefern.

3. Schalter nach Anspruch 2, dadurch gekennzeichnet, daß, wenn die beiden Abschnitte parallel sind, die Elektroden ($E_{11}$, $E_{12}$, $E_{21}$, $E_{22}$) abgeschrägt sind, so daß die Enden der beiden Abschnitte vollständig bedeckt sind und in der Nähe ihrer Mitten an die zwei Abschnitte angrenzen.

4. Schalter nach Anspruch 2, dadurch gekennzeichnet, daß die Elektroden ($E_{11}$, $E_{12}$, $E_{21}$, $E_{22}$) der beiden Paare einen konstanten Abstand voneinander aufweisen, und die beiden Abschnitte nicht zueinander parallel sind, so daß sie an ihren Enden vollständig von den Elektroden bedeckt sind und in der Nähe ihrer Mitten an die Elektroden angrenzen.

5. Schalter nach einem der Ansprüche 2 bis 4, dadurch gekennzeichnet, daß die Generatormittel eine Spannungsquelle (3) umfassen, die mit Steuermitteln (5) versehen ist, die es ermöglichen, sie parallel zu den beiden Elektroden der beiden Paare zu schalten, und zwar für den Zustand in demselben Sinne und für den zweiten Zustand in entgegengesetztem Sinne.

6. Schalter nach einem der Ansprüche 1 bis 5, dadurch gekennzeichnet, daß die Leiter (1, 2) an der Oberfläche eines ferro-elektrischen Substrats (4) gebildet sind.

7. Schalter nach Anspruch 6, dadurch gekennzeichnet, daß das Material (4) Lithiumniobat ist, welches so orientiert ist, daß seine Achse c senkrecht zu der Oberfläche ist, wo die Leiter (1, 2) gebildet sind, wobei diese durch Titandiffusion in dem Substrat (4) erhalten sind.

8. Integrierte optische Schaltung, dadurch gekennzeichnet, daß sie wenigstens einen Schalter nach einem der vorstehenden Ansprüche umfaßt.

## Claims

1. Electrically controlled electro-optic switch comprising two wave guides (1, 2) formed in an electro-optic material (4) and electrodes ($E_{11}$, $E_{12}$, $E_{21}$, $E_{22}$) generating an electric field for modulating the speed of optic radiations traveling through these guides in two adjacent sections, to perform an energy transfer depending on a control voltage, characterized in that the intensity of the modulating electric field (E) generated by the electrodes increases along these adjacent sections with increasing distance from their centers; the orientations of the electric fields on both sides of these centers being similar in one switching state and inverted in the other state.

2. Switch in accordance with claim 1, characterized in that it comprises two electrode pairs ($E_{11}$, $E_{12}$, $E_{21}$, $E_{22}$), each pair generating electric fields in the two sections on both sides of their centers, the fraction of length of these guides (1, 2) covered by the electrodes increasing with increasing distance from the centers of the sections of the same waves guides, the switch further comprising voltage generator means (3) feeding two voltage pairs of the same sign in the first state and of opposite signs in the second state between the two electrodes.

3. Switch in accordance with claim 2, characterized in that, the two sections being parallel, the electrodes ($E_{11}$, $E_{12}$, $E_{21}$, $E_{22}$) are beveled in a manner to completely cover the ends of the two sections and to be adjacent to the two sections in the neighborhood of their centers.

4. Switch in accordance with claim 2, characterized in that the electrodes ($E_{11}$, $E_{12}$, $E_{21}$, $E_{22}$) of the two pairs being separated by a constant distance, the two sections are non-parallel in a manner to be completely covered by the electrodes on their ends and to be adjacent to the electrodes in the neighborhood of their centers.

5. Switch in accordance with any of claims 2 to 4 characterized in that the generator means comprise a voltage source (3) provided with control means (5) allowing the same to be connected in parallel across the two electrodes of the two pairs, in the same sense for the first state and in the opposite sense for the second state.

6. Switch in accordance with any of claims 1 to 5, characterized in that the guides (1, 2) are formed on the surface of a ferro-electric substrate (4).

7. Switch in accordance with claim 6, characterized in that the material (4) is lithium niobate oriented in such a manner that its axis c is normal to the surface where the guides (1, 2) are formed, the latter being obtained by titanium diffusion in the substrate (4).

8. Integrated optic circuit, characterized in that it comprises at least one switch in accordance with any of the preceding claims.

FIG.1

FIG.2

FIG.3

FIG.4

FIG.5

FIG.6

FIG.8

FIG.7

FIG.9

FIG.10

FIG.11

FIG.12